# EUROPEAN PATENT SPECIFICATION

(11) **EP 1 213 572 B1**
(45) Date of publication and mention of the grant of the patent: **19.03.2003**
(21) Application number: 00830800.9
(22) Date of filing: 05.12.2000
(51) Int. Cl.: G01K 7/02, G01K 1/08

(54) **Method for manufacturing a sealed temperature probe and probe thus manufactured**
Dichte Temperatursonde sowie ein Verfahren zu ihrer Herstellung
Sonde de température encapsulée et un procédé de fabrication correspondent

(43) Date of publication of application: 12.06.2002
(73) Proprietor: Italcoppie S.r.l., 26030 Malagnino (CR) (IT)
(72) Inventor: Noli, Mario, 43011 Busseto PR (IT)
(74) Representative: Concone, Emanuele

(56) References cited:
- DD-A- 256 951
- PATENT ABSTRACTS OF JAPAN vol. 018, no. 461 (E-1597), 26 August 1994 (1994-08-26) & JP 06 151653 A (HITACHI CABLE LTD), 31 May 1994 (1994-05-31)
- PATENT ABSTRACTS OF JAPAN vol. 1996, no. 12, 26 December 1996 (1996-12-26) & JP 08 219904 A (MATSUSHITA ELECTRIC IND CO LTD), 30 August 1996 (1996-08-30)
- PATENT ABSTRACTS OF JAPAN vol. 1996, no. 08, 30 August 1996 (1996-08-30) & JP 08 094452 A (MITSUBISHI MATERIALS CORP), 12 April 1996 (1996-04-12)

## Description

The present invention relates to temperature probes of electric type, and in particular to a method for manufacturing a sealed probe as well as to a probe manufactured according to said method.

It is known that a temperature probe of electric type consists of an insulated cable including one or more pairs of conducting wires suitable to transmit the electric signals coming from a sensor member soldered at the end of said wires. For a correct and reliable operation of the probe it is essential that the sensor be perfectly insulated from the environment. To this purpose, the probe terminal where the wires are soldered to the sensor must be sealed onto the insulated cable so as to achieve a continuity of insulation.

In known probes this sealing is carried out in two ways, namely through a resin covering or through an overmoulding of the sensor with the same thermoplastic material of which the outer sheath of the cable is made (or with another material compatible therewith, i.e. capable of melting and mixing therewith).

In the first case the resin covering does not guarantee a perfect long-term sealing when the probe undergoes repeated thermal cycles, in particular when it is used for measurements in cold environments. In fact, since it is a material having a thermal expansion coefficient different from that of the cable sheath a detachment is inevitably reached. This implies the possibility that the condensate forming on the cable penetrates the probe terminal causing a malfunctioning.

An example of this type of probe is found in JP-08094452 (Mitsubishi Materials Corp.) which discloses a thermistor element inserted into a protective case injected with a liquid resin which is subsequently cured to produce a resin moulded thermistor. Another example of a resin-coated thermistor element is found in JP-08219904 (Matsushita Electric Ind. Co. Ltd.) which also discloses a heat-resistant rubber tube in which the coated thermistor is inserted prior to the caulking on a metal fixing plate.

In the second case this problem is overcome in that by using the same material there is achieved a perfect sealing thanks to the fusion of the covering with the cable sheath. However even this solution has various drawbacks given by the difficulty of moulding the covering.

First of all, the standards require the insulating covering of the sensor to have an established minimum thickness and in order to have an adequate certainty that said minimum value is achieved it is necessary to mould a covering of a significantly greater thickness. This results from the fact that the sensor is very small and light and the wires to which it is soldered are flexible, whereby it can easily move from the central position inside the mould upon injection of the thermoplastic material. The greater thickness should thus compensate for a possible eccentricity of the sensor, which is also limited as far as possible through complicated injection balancing systems and by keeping the covering as short as possible.

As a consequence, the probe thus manufactured necessarily has a terminal of short length and a diameter greater than the minimum which could be achieved according to the standards, and it requires the use of complicated and expensive moulding systems. Moreover, this solution still does not allow to have the absolute certainty that the thickness is as required.

A further drawback stems from the fact that in order to obtain a double insulation with two layers of different material and/or colour it is necessary to carry out a double moulding. This obviously implies higher costs and a further increase in diameter.

An example of this type of probe is found in JP-06151653 (Hitachi Cable Ltd.) which discloses a primary sealing part applied by injection moulding over a thermistor element, and then a secondary sealing part applied by injection moulding to the surface of the primary sealing part. The latter is provided with protrusions in order to prevent its movement at the time of the injection moulding of the secondary sealing part, but still provides no teaching as to the problems connected with the moulding of the primary sealing part.

Therefore the object of the present invention is to provide a probe and a manufacturing method which overcome said drawbacks. This object is achieved by introducing the sensor, prior to the overmoulding step, into a covering element which assures the required minimum thickness.

A first fundamental advantage of the present invention is therefore that of obtaining a probe in which the minimum thickness of the sensor insulating covering is guaranteed, and furthermore without requiring complicated injection balancing systems.

A further advantage stems from the fact that the probe thus obtained has a terminal of the smallest diameter possible which can also be longer without implying any manufacturing difficulty. In other words, there is greater freedom in the choice of the terminal size.

Still another advantage is given by the possibility of easily obtaining a double insulation with different layers through a single manufacturing step and without an excessive increase in diameter.

These and other advantages and characteristics of the method and probe according to the present invention will be clear to those skilled in the art from the following detailed description of some embodiments thereof, with reference to the annexed drawings wherein:
Fig.1 is a partial longitudinal sectional view of the terminal of a probe according to the invention, in a first embodiment thereof; and
Figs.2, 3, 4 and 5 are views similar to the preceding view of other four embodiments of the present probe.

With reference to said figures, there is seen that a probe according to the invention conventionally includes a cable C provided with an outer insulating sheath G which encloses at least a pair of conducting wires F, insulated in turn by respective inner sheaths P, which end with an exposed length where a sensor S is soldered.

The novel aspect of the present probe is the presence of a covering element into which sensor S is introduced prior to the injection moulding of the thermoplastic material M. In practice, the covering element is then fused together with material M to form a single body with sheath G, so as to assure a perfect sealing.

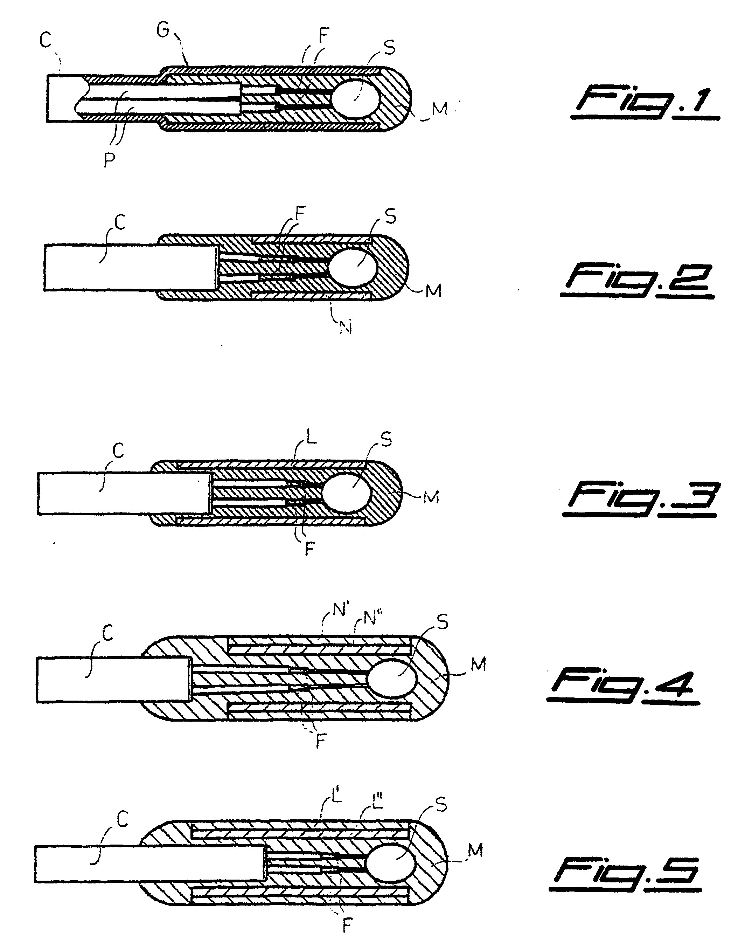

In the embodiment of fig.1, the simplest, the covering element consists of the end portion of the outer sheath G which is pushed forward. In other words, sensor S is first soldered to wires F, then sheath G is slid along the inner sheaths P until it encloses sensor S; finally the probe terminal is placed in the mould and material M is injected to fill the end portion of sheath G and form a closure plug

This simple and effective solution has however some limits, namely that sensor S has a size smaller than the inside diameter of sheath G and that the latter has a thickness equal to or greater than the required minimum thickness of the insulating covering. Moreover it is obvious that such a solution is not applicable in the case of cables without outer sheath G, i.e. in case there are only the two sheaths P (possibly joined or not).

In order to overcome said limits the covering element may be a separate member, i.e. essentially a tube extending at least sufficiently to enclose sensor S and the exposed length of wires F, such as tube N in fig.2, but which can even be sufficiently long as to slip on cable C, as tube L in fig.3

In practice, sensor S is introduced into the covering tube prior to being placed in the mould, which then retains the tube in position during the injection of material M. The blocking of the tube can be achieved in various ways, the simplest being an interference between the tube and the mould, e.g. using a tube of oval cross-section in a mould of circular cross-section or vice versa (this blocking requirement is obviously absent in the first embodiment described above).

Moreover, it is clear that in this case material M extends up to externally coating the end portion of sheath G so as to achieve a perfect sealing between the tube and the sheath thanks to the fusion of said two elements into a single body In this regard, it should be noted that the tube may be either of the same material of sheath G or of another material compatible therewith, as previously said for material M.

The use of a separate tube as covering element makes possible to easily obtain a multiple insulation with two or more different layers, as shown in figs 4 and 5. In fact, by applying the same method described above it is sufficient to use a tube with at least two layers consisting of an outer material (N'; L') and an inner material (N": L") coupled so as to form a single element. In this way the increase in diameter of the probe terminal is the smallest possible in compliance with the standards.

It should be noted that though figs.2-5 show a cable provided with an outer sheath G, what said above also applies to the above-mentioned case of a cable provided with the individual sheaths P only. Furthermore it is clear that shapes, sizes and materials of the above-described elements (in particular of tubes N, L) may freely change according to the specific needs of the application for which the probe is intended. For example, the inner material (N"; L") of a two-layer tube could also be not compatible with material M, since it is sufficient to have the compatibility of the outer material (N'; L') enclosing it.

## Claims

1. A method for manufacturing a temperature probe including a cable consisting of at least a pair of conducting wires insulated by respective sheaths which end with an exposed length where a sensor is soldered, said method ending with the covering of said sensor and exposed length of wires by overmoulding with a thermoplastic material same as or compatible with the material of said insulating sheaths, **characterized in that** said final overmoulding step is preceded by a step where the sensor and exposed length of wires are introduced into a covering element.

2. A method according to claim 1, **characterized in that** in case the cable is provided with an outer sheath enclosing the insulating sheaths of the conducting wires the step where the sensor and exposed length of wires are introduced into a covering element consists in sliding the outer sheath along the insulating sheaths until it encloses the sensor, the end portion of said outer sheath acting as covering element.

3. A method according to claim 1, **characterized in that** the step where the sensor and exposed length of wires are introduced into a covering element consists in introducing them into a covering tube, and **in that** said step is followed by a step where said tube is placed and blocked in the mould so as to prevent its movement during the injection of the thermoplastic material.

4. A method according to claim 3, **characterized in that** in the step where the sensor and exposed length of wires are introduced into a covering tube the latter is also slipped on the cable.

5. A temperature probe including a cable (C) provided with at least a pair of conducting wires (F) insulated by respective sheaths (P) and ending with an exposed length where a sensor (S) is soldered, which together with said exposed length of wires (F) is enclosed by a covering overmoulded with a thermoplastic material (M) same as or compatible with the material of said insulating sheaths (P), **characterized in that** said covering further includes a covering element which encloses said sensor (S) and the exposed length of wires (F).

6. A temperature probe according to claim 5, **characterized in that** the cable (C) includes an outer sheath (G) enclosing the insulating sheaths (P) and **in that** the covering element is the end portion of said outer sheath (G).

7. A temperature probe according to claim 5, **characterized in that** the covering element is a covering tube (N; L).

8. A temperature probe according to claim 7, **characterized in that** the covering tube (L) is sufficiently long to be slipped on the cable (C).

9. A temperature probe according to claim 7 or 8, **characterized in that** the covering tube (N; L) is a tube with at least two layers consisting of at least an outer material (N';L') and an inner material (N"; L") coupled so as to form a single element.

## Patentansprüche

1. Verfahren zur Herstellung eines Temperaturmeßfühlers einschließlich eines Kabels, bestehend aus mindestens einem Paar leitender, durch jeweilige Ummantelungen isolierter Drähte, die mit einem freiliegenden Abschnitt enden, wo ein Sensor angelötet ist, wobei das Verfahren endet mit dem Bedecken des Sensors und des freiliegenden Abschnitts der Drähte durch Überformen mit einem thermoplastischen Material, welches dasselbe Material oder kompatibel mit dem Material der isolierenden Ummantelungen ist, **dadurch gekennzeichnet, daß** dem letzten Überformungsschritt ein Schritt vorausgeht, wo der Sensor und der freiliegende Abschnitt der Drähte in ein umhüllendes Element eingeführt werden.

2. Verfahren nach Anspruch 1, **dadurch gekennzeichnet, daß** in dem Falle, daß das Kabel eine äußere Ummantelung aufweist, die die isolierenden Ummantelungen der leitenden Drähte umschließt, der Schritt, wo der Sensor und der freiliegende Abschnitt der Kabel in ein umhüllendes Element eingeführt werden, darin besteht, daß die äußere Ummantelung entlang der isolierenden Ummantelungen verschoben wird, bis sie den Sensor einschließt, wobei der Endabschnitt der äußeren Ummantelung als umhüllendes Element wirkt.

3. Verfahren nach Anspruch 1, **dadurch gekennzeichnet, daß** der Schritt, wo der Sensor und der freiliegende Abschnitt der Drähte in ein umhüllendes Element eingeführt werden, darin besteht, daß sie in ein umhüllendes Rohr eingeführt werden, und dadurch, daß auf diesen Schritt ein Schritt folgt, wo das Rohr im Formwerkzeug plaziert und blockiert wird, so daß es an einer Bewegung während des Einspritzens des thermoplastischen Materials gehindert wird.

4. Verfahren nach Anspruch 3, **dadurch gekennzeichnet, daß** in dem Schritt, wo der Sensor und der freiliegende Abschnitt der Drähte in ein umhüllendes Rohr eingeführt werden, letzteres auch auf das Kabel geschoben wird.

5. Temperaturmeßfühler mit einem Kabel (C) mit wenigstens einem Paar von leitenden Drähten (F), die durch jeweilige Ummantelungen (P) isoliert sind und mit einem freiliegenden Abschnitt enden, wo ein Sensor (S) angelötet ist, der zusammen mit dem freiliegenden Abschnitt der Drähte (F) von einer Umhüllung eingeschlossen ist, die überformt ist mit einem thermoplastischen Material (M), welches dasselbe Material oder kompatibel mit dem Material der isolierenden Ummantelungen (P) ist, **dadurch gekennzeichnet, daß** die Umhüllung darüber hinaus ein umhüllendes Element enthält, das den Sensor (S) und den freiliegenden Abschnitt der Drähte (F) umschließt.

6. Temperaturmeßfühler nach Anspruch 5, **dadurch gekennzeichnet, daß** das Kabel (C) eine äußere Ummantelung (G) aufwetst, die die isolierenden Ummantelungen (P) einschließt, und dadurch, daß das umhüllende Element der Endabschnitt der äußeren Ummantelung (G) ist.

7. Temperaturmeßfühler nach Anspruch 5, **dadurch gekennzeichnet, daß** das umhüllende Element ein umhüllendes Rohr (N; L) ist.

8. Temperaturmeßfühler nach Anspruch 7, **dadurch gekennzeichnet, daß** das umhüllende Rohr (L) ausreichend lang ist, um auf das Kabel (C) geschoben zu werden.

9. Temperaturmeßfühler nach Anspruch 7 oder 8, **dadurch gekennzeichnet, daß** das umhüllende Rohr (N; L) ein Rohr mit wenigstens zwei Schichten aus wenigstens einem äußeren Material (N'; L') und einem inneren Material (N"; L") ist, die so verbunden sind, daß sie ein einziges Element bilden.

## Revendications

1. Procédé de fabrication d'une sonde de température incluant un câble comprenant au moins une paire de brins conducteurs isolés par des gaines respectives dont l'extrémité présente une longueur dénudée à laquelle est soudé un capteur, ledit procédé se terminant par le revêtement dudit capteur et de la longueur dénudée des brins par surmoulage avec un matériau thermoplastique analogue ou compatible avec le matériau desdites gaines isolantes, **caractérisé en ce que** ladite étape finale de surmoulage est précédée par une étape dans laquelle le capteur et la longueur dénudée des brins sont introduits dans un élément de revêtement.

2. Procédé selon la revendication 1, **caractérisé en ce que**, dans le cas dans lequel le câble est constitué avec une gaine extérieure enfermant les gaines isolantes des brins conducteurs, l'étape dans lequel le capteur et la longueur dénudée des brins sont introduits dans un élément de revêtement consiste à faire coulisser la gaine extérieure le long des gaines isolantes jusqu'à ce qu'elle enferme le capteur, la partie d'extrémité de ladite gaine extérieure jouant le rôle d'élément de revêtement.

3. Procédé selon la revendication 1, **caractérisé en ce que** l'étape dans laquelle le capteur et la longueur dénudée des brins sont introduits dans un élément de revêtement consiste à les introduire dans un tube formant revêtement, et **en ce que** ladite étape est suivie par une étape dans laquelle ledit tube est positionné et bloqué dans le moule de façon à empêcher son mouvement pendant l'injection du matériau thermoplastique.

4. Procédé selon la revendication 3, **caractérisé en ce que** l'étape dans laquelle le capteur et la longueur dénudée des brins sont introduits dans un tube formant revêtement ce dernier est également monté sur le câble par glissement.

5. Sonde de température incluant un câble (C) constitué par au moins une paire de brins conducteurs (F) isolés par des gaines respectives (P) et se terminant avec une longueur dénudée à laquelle est soudé un capteur (S), laquelle conjointement avec ladite longueur dénudée des brins (F) est enfermée par un revêtement surmoulé en un matériau thermoplastique (M) analogue ou compatible avec le matériau desdites gaines isolantes (P), **caractérisée en ce que** ledit revêtement comprend en outre un élément de revêtement qui enferme ledit capteur (S) et la longueur dénudée des brins (F).

6. Sonde de température selon la revendication 5, **caractérisée en ce que** le câble (C) inclut une gaine extérieure (G) enfermant les gaines isolantes (P), et **en ce que** l'élément de revêtement est la partie d'extrémité de ladite gaine extérieure (G).

7. Sonde de température selon la revendication 5, **caractérisée en ce que** l'élément de revêtement est un tube formant revêtement (N, L).

8. Sonde de température selon la revendication 7, **caractérisée en ce que** le tube formant revêtement (L) est suffisamment long pour être monté sur le câble (C) par glissement.

9. Sonde de température selon la revendication 7 ou 8, **caractérisée en ce que** le tube formant revêtement (N, L) est un tube avec au moins deux couches comprenant au moins un matériau extérieur (N', L') et un matériau intérieur (N", L") unis de façon à former un élément unique.
